# EUROPEAN PATENT SPECIFICATION

(11) **EP 0 932 318 B1**
(45) Date of publication and mention of the grant of the patent: **02.01.2008**
(21) Application number: 99101190.9
(22) Date of filing: 22.01.1999
(51) Int. Cl.: H04Q 7/38

(54) **Method for channel change in digital radiocommunication system**
Verfahren zur Kanalwandlung in einem digitalen Funkkommunikationssystem
Procédé de change de canal dans un système de radiocommunication numérique

(30) Priority: 26.01.1998 IT MI980129
(43) Date of publication of application: 28.07.1999
(73) Proprietor: Italtel S.p.a., 20154 Milano (IT); Siemens S.p.A., 20126 Milano (IT)
(72) Inventor: De Benedittis, Rosella, 20020 Barbaiana di Lainate (MI) (IT); Betti, Alessandro, 62100 Macerata (IT)
(74) Representative: Berg, Peter

(56) References cited:
- EP-A- 0 576 079
- EP-A- 0 722 258
- EP-A- 0 749 256
- EP-A- 0 895 437
- US-A- 5 613 203
- BONZANO L ET AL: "DECT performance in the wireless PBX application" ICC '93 GENEVA. IEEE INTERNATIONAL CONFERENCE ON COMMUNICATIONS '93. TECHNICAL PROGRAM, CONFERENCE RECORD (CAT. NO.93CH3261-5), PROCEEDINGS OF ICC '93 - IEEE INTERNATIONAL CONFERENCE ON COMMUNICATIONS, GENEVA, SWITZERLAND, 23-26 MAY 1993, pages 1269-1273 vol.2, XP002136277 1993, New York, NY, USA, IEEE, USA ISBN: 0-7803-0950-2

## Description

### Technical Field

The present invention relates to the digital telecommunication systems with time division access technique, TDMA (Time Division Multiple Access), and in particular a system according to the DECT (Digital Enhanced Cordless Telecommunications) technology.

More precisely the invention is addressed to the change modalities of the so-called bearer (indicated hereafter with equivalent signification by the term "radio channel") defined by the couple time slot/frequency through which the connection between two transceiver units (one mobile unit PP (Portable Part) and a fixed unit RFP (Radio Fixed Part) occurs.

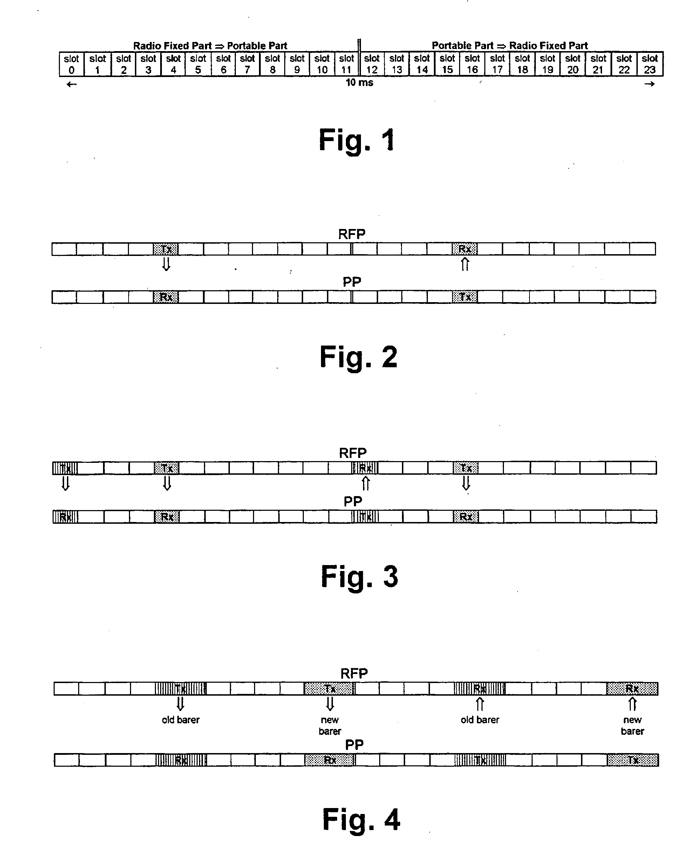

As already known, in a DECT system, the transmission and reception of the signals between both radio units, mobile (Portable Part (PP)) and fixed (Radio Fixed Part (RFP)) is arranged in frames. The frame is divided in 2 half frames: normally, the first half frame is used in the fixed to mobile direction (downlink direction) and the second one is used in the mobile to fixed direction (uplink direction). As depicted in Fig. 1, every half frame is subdivided in 12 full type time slots , inside of which the rice-transmission of the useful signal occurs according to the TDMA technique. Inside a specific time slot the transmission of a signal uses one of the 10 carriers/radio frequencies allocated into the band (1800 - 1900 MHz) assigned to the DECT systems.

For connections of the duplex type, used for example for phone calls, the transmission and the reception channels of a radio unit (the reception and the transmission channels of the other interactive radio unit, respectively) use the same radio carrier and half frame spaced time slots. Fig. 2 shows an example of assignment of time slots for a phone call, (according to DECT terminology, a full duplex bearer).

In the systems according to the DECT standard also asymmetric connections are defined, preferably used for data transmission. An asymmetric connection may be set up by one (or more) duplex bearers (i.e. a pair of full slots spaced out by half a frame with an opposite direction and the same radio carrier) and/or simplex bearers (i.e. a pair of full slots spaced out by half a frame with the same transmission direction and the same radio carrier).

Fig. 3 shows an example of frame occupation by one asymmetric downlink connection based on one double simplex bearer and one duplex bearer.

As already said the time slot/frequency pair defines the radio bearer (or radio channel).

When the quality perceived on the used channel turns out to be deteriorated, changes of the radio bearer on which the connection is established may occur (bearer handover)

In the DECT systems different mechanisms are foreseen to check the quality of a communication channel and the transmission quality information obtained may be used by a radio unit to start off a procedure for the change of the bearer (handover) inside the same cell (intracell handover) or towards a new cell (intercell handover).

In the DECT standard procedures have been defined (i.e. handover) for the change of a radio channel inside a cell or between different cells, if these ones belong to the same cell cluster. The term cluster indicates precisely a unit of cells among which it is possible to carry out the procedure of bearer handover.

The procedure of bearer handover defines therefore the establishment of a new radio bearer for the replacement of the already established one on which a poor connection quality has been perceived.

### Background Art

EP-A-576 079 discloses a digital telecommunication system in which, during the bearer handover procedure, for a limited period of time, both bearers (the one to be replaced and the new one) coexist and transport the same information.

The two bearers have to be allocated in different time slots, exception made if the two interacting radio units can use a double transceiver. In fact, when both interactive radio units have a single transceiver, it is necessary that the new requested channel occupy at least a different (from the one in which the old bearer is fitted) and additional time slot (furthermore, possibly a new radio carrier)

The known procedure presents therefore the drawback that it requires the use of two bearers for the transportation of a unique payload, so rendering not available to the system a bearer that hence cannot be assigned to a user forwarding a connection request during the period of time in which both bearers are active.

US 5 613 203 discloses a method for handover between old and new cells of a time division multiple access cellular mobile radio system, for example a system conforming to the GSM standard. In this kind of systems, measurement reports are regularly supplied by the mobile station MS to the base station BS1 and vice versa. If these reports indicate that the quality of the call in progress is such that handover between a first cell and a second cell is needed, than the controller BSC of the GSM system verifies that the on air time slot of the corresponding to the radio channel used by the mobile station MS for exchanging speech data through the intermediary base station BS1 is also available in said second cell. If this is the case, the controller BSC advises the frame unit FU1 of the base station BS1 of the new frequency to be used for exchanging speech data with the mobile station. The BSC communicates this information in a redefine frequency message constituting a frequency indication message.

According to the above, US 5 613 203 refers to a GSM like system where the decision of which radio resources (time slots and frequency) have to be assigned resides in the radio network (i.e. BSC), whereas the present application refers to a DECT system, where this decision is let to the mobile station.

EP A 0895437, which is a prior art under Article 54(3) EPC, describes various embodiments of a wireless data communication system, like the Japanese personal handyphone system (PHS), whose communication medium is capable of performing multiple access duplex (TDMA-TDD) using a plurality of communication slots assigned in a plurality of carriers (frequencies). All the exemplary embodiments make use of a multislot connection between a radio communication terminal (PS) and a radio base station (CS). In this type of connection a problem arises when one of the used time slots becomes interfered and has therefore to be released without dropping the call.

According to a nearest third embodiment, if trouble occurs in one of the two communication slots when communication is performed via two communication slots, the communication is performed using two communication carriers. This way of proceed has the drawback of incrementing the number of resources in respect of those initially allocated. Furthermore, as said for the preceding citation, also in EP A 0895437 the decision of changing the troubled communication slot resides in the base station rather than in the mobile terminal, like the DECT system.

### Object of the invention

It is one object of the present invention to overcome the above-mentioned drawbacks and limitations and, in particular, to realise a method for the change of a radio bearer in a DECT like system in which, respecting the rules of channel allocation imposed by the reference standard, will conserve the same time slot and modify only the radio carrier without requiring the use - even only temporary - of an additional time slot in this way indeed available for new communications.

### Summary of the Invention

According to the method proposed by the invention only the frequency of the bearer will be changed but conserving the same transmission and reception time slots.

This turns out to be especially advantageous in those cases where inside the cell (or the cluster) the number of active traffic channels is high (and consequently the number of available time slots is extremely reduced) and in particular when the bearer to be changed occupies two time slots of the full type: in other words it is a double slot.

The invention achieves these scopes by means of a method having the characteristics exposed in claim 1.

The features of the present invention which are believed to be novel are set forth with particularity in the appended claims.

### Brief description of the drawings

The invention, together with further objects and advantages thereof, may be understood with reference to the following description, taken in conjunction with the accompanying drawings, and in which:
Fig. 1 (already described) illustrates the structure of the DECT frame;
Fig. 2 (already described) shows an example of time slot occupation for a full duplex connection;
Fig. 3 (already described) shows an example of frame occupation by an asymmetric downlink connection;
Fig. 4 shows a frame occupation example during the procedure of intracell handover of a double slot, as defined by the ETSI standard;
Fig. 5 illustrates a message exchange - according to the invention - for the switching from the duplex bearer X into the duplex bearer Y required by PP. The example reports the case in which the confirmation message of the new bearer will be transported on the old bearer; and
Fig. 6 - which is not part of the invention but it is useful to understand the invention - illustrates a message exchange on the duplex bearer Z for the switching of the duplex (double simplex) bearer X in the duplex (double simplex) bearer Y, requested by RFP.

### Detailed Description of possible Embodiments of the Method the present Invention is based on

As previously indicated, the radio bearer changes may happen when the quality perceived on the used channel is deteriorated. The new chosen bearer must be the less interfered of a filled in table of channels, appropriately updated by the radio unit operating the choice, and it must not belong to the group of bearers or channels judged as interfered (busy channels).

The list of channels will be split in bands of detected power, RSSI (Received Signal Strength Interference), with width less than 6 dB. In particular, the channels with an RSSI measure lower than the minimum value are considered to be "quiet" and may be selected immediately, while the channels with a RSSI measure higher than a maximum value are considered as "busy" and they cannot be selected. The channels with an RSSI measure within the minimum and the maximum limits are ordered on the basis of the band they belong to.

When a bad quality of the connection is perceived, the radio unit, on one or both time slots of the bearer in use, (denoted as bearer X) will start listening a new frequency (for example the most distant one from the used one in the assigned band). If the new listened channel, called for convenience bearer Y, is not a "busy channel", and if the channel or the channels less interfered of the previously filled in table cannot be activated (for example due to asynchronicity of radio scanning on the interactive unit) within the following three DECT frames, the radio unit will be authorised to use bearer Y.

According to an embodiment the listening may happen in time slots where the synchronisation did not take place, an equivalent situation to the missed recognition of the synchronism word defined in the DECT standard.

The request/negotiation with the interactive radio unit of the new bearer will occur in one of the following ways.

### A) DUPLEX TYPE BEARER X

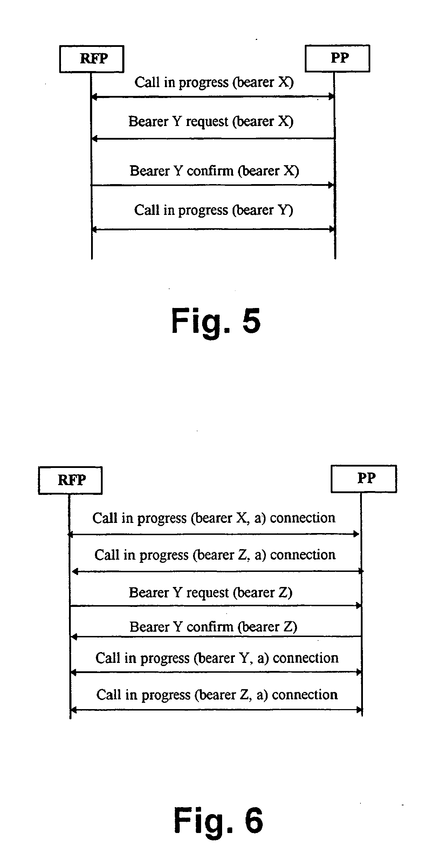

With reference to Fig. 5 depicting a possible scenario of messages for the switching from the duplex bearer X into the duplex bearer Y, the requiring radio unit sends to the interactive radio unit ,on the bearer X and in the own transmission half frame immediately following to the listening/choice of the bearer Y, a message requiring the activation of the bearer Y. The interactive radio unit confirms the use of the new bearer sending on the bearer X, and in the own transmission half frame immediately following the reception of the request message, a specific confirmation message. From this point forward both radio units will communicate on bearer Y instead of bearer X. According to an alternative solution the confirmation message may be sent on the new bearer Y instead of bearer X as specified before.

If the request is not followed by a confirmation, the requiring radio unit may once again transmit the request of bearer Y on bearer X; if it still does not receive confirmation/response, it will be opportune to scan a new radio bearer (for example a new frequency on the same time slots of the bearer X). If bearer X is belonging to a multibearer connection, the negotiation protocol of the new bearer Y may take place on another bearer of the same connection, which will be called bearer Z, where the connection quality is good.

### B) BEARER X OF THE DOUBLE SYMPLEX TYPE

As remembered before, a double simplex bearer always belongs to a multibearer connection comprising at least a duplex bearer. Therefore in this case the negotiation protocol of the new double simplex bearer Y may take place on a duplex bearer, called here for convenience bearer Z, of the same connection. Fig. 6 reports a possible scenario of messages for the switching from the double simplex bearer X into the double simplex bearer Y using the duplex bearer Z where bearers X, Y and Z belong to the same multibearer connection. The example reports the case where the request and confirmation messages of the new double simplex bearer are transported on a duplex bearer of the same connection.

In order to further optimise the change times of the bearer, the conditions of synchronism loss on bearer X may be used by the requiring radio unit to monitor in the same time slot new frequencies (i.e. the bearers Y).

Turning back to the more general case, when the radio unit which wants to operate the bearer change has at its disposal two receivers, the listening of a new frequency on the current bearer may take place without interrupting the communication in progress. This makes it possible to substitute the bearer of the seamless type or without data loss.

In particular, according to the invention, the operation of listening to a new frequency on at least one of the time slots used in reception, with the purpose to identify a second not interfered bearer Y, and to define an interruption of the established communication on said first interfered bearer X, will be preferentially carried out by the one of the two transceiving devices in that inactive time slot.

The remaining operations such as:
^{••} sending from the requiring radio unit to the interactive radio unit a request message for the activation of said second bearer Y;
^{••} transfer of all other communications between both radio units from said first bearer to said second bearer Y as soon as the requiring radio unit receives a specific confirmation message by the interactive radio unit for the use of the second bearer Y;
^{••} return to the listening step if said confirmation message is not received,
are carried out by the other transceiver (in that moment occupied in an other communication on bearer X) with the consequent advantage to carry out the transfer of the communication from the first bearer X to the second bearer Y without an interruption of the communication, or with seamless modality.

The method according to the invention makes it possible to obtain the following advantages:
^{••} bigger facility in the selection of a new radio bearer;
^{••} smaller waste of the radio resources and therefore minor electromagnetic interference;
^{••} bigger rapidity in the substitution of a radio bearer and therefore reduction of the deterioration time of a communication in progress;
^{••} reduction of the collisions and consequent increase of the capacity of the system according to the invention.

Although the invention has been described with particular reference to a preferred embodiment, it will be evident to those skilled in the art, that the present invention is not limited thereto, but further variations and modifications may be applied without departing from the scope thereof. It is thus contemplated that the present invention encompasses any and all such embodiments covered by the following claims.

## Claims

1. Method for the change of a radio bearer (X) in a Digital Enhanced Cordless Telecommunication system, called DECT, comprising a radiomobile unit (PP), hereinafter defined as the requiring radio unit, in connection on at least a first radio bearer (X) with a fixed radio unit (RFP), hereinafter defined as the interactive radio unit, **characterized in that** when said requiring radio unit (PP) detects a bad quality of the connection established with said interactive radio unit (RFP) on said first radio bearer (X), executes in sequence the steps of:
a) listening a new frequency on at least one of the time slots used for reception on the first radio bearer (X), for the purpose of identifying a second non interfered bearer (Y) comprising the new frequency but conserving the same transmission and reception time slots of the first radio bearer (X), and of defining an interruption of the communication established on said first interfered bearer (X);
b) testing that said second bearer (Y) does not belong to a previously filled in table of channels considered to be interfered and if so sending to the interactive radio unit (RFP) a request message requiring the activation of said second bearer (Y);
c) transferring of the communication from said first bearer (X) to said second bearer (Y) upon reception of a specific confirmation message from the interactive radio unit (RFP) for the use of the second bearer (Y);
d) returning to the listening step if said confirmation message is not received.

2. Method according to claim 1, **characterised in that** said request message is sent on said first bearer (X).

3. Method according to claim 1, **characterised in that** said request message is sent on the second bearer (Y).

4. Method according to claim 1, **characterised in that** said confirmation message is received on said first bearer (X).

5. Method according to claim 1, **characterised in that** said confirmation message is received on said second bearer (Y).

6. Method according to any previous claim, **characterised in that** step b) is repeated at least one time before going over to step d).

7. Method according to claim 1, **characterised in that** step b) is preceded by a check that other less interfered channels of said table cannot be activated.

8. Method according to any previous claim, **characterised in that**, if said first interfered bearer (X) belongs to a multibearer connection and is of the double simplex type, the negotiation protocol of the new bearer Y according to step c) takes place on at least one of the bearers (Z) of the duplex type of the same connection.

9. Method according to the claim 2, **characterised in that** said request message is sent in the own transmission half frame immediately following to the listening/choice of the found bearer (Y).

10. Method according to the claim 4, **characterised in that** said confirmation message is received in the own transmission half frame immediately following the sending of said request message.

11. Method according to any previous claim, **characterised in that** said listening step occurs in the time slots where the synchronisation did not happen.

12. Method according to any previous claim, **characterised in that** said radio units (PP, RFP) are provided with a double transceiving device and **in that** the listening of a new frequency described in the above-mentioned step a) is carried out by the inactive one **in that** moment of the said two transceiver devices, while the remaining steps b), c), d) are carried out by the other transceiver.

## Patentansprüche

1. Verfahren zum Wechseln eines Funkträgers (X) in einem Digital Enhanced Cordless Telephone-System, kurz DECT genannt, welches eine mobile Funkeinheit (PP, Portable Part) umfasst, die im Folgenden als die anfordernde Funkeinheit bezeichnet wird, die über mindestens einen ersten Funkträger (X) mit einer ortsfesten Funkeinheit (RFP, Radio Fixed Part), die im Folgenden als die interaktive Funkeinheit bezeichnet wird, in Verbindung steht, **dadurch gekennzeichnet, dass** die besagte anfordernde Funkeinheit (PP), wenn sie auf der Verbindung, die über den besagten ersten Funkträger (X) zu der besagten interaktiven Funkeinheit (RFP) besteht, eine ungenügende Qualität feststellt, der Reihe nach die folgenden Schritte ausführt:
a) Abhören einer neuen Frequenz in mindestens einem der Zeitschlitze, die für den Empfang auf dem ersten Funkträger (X) verwendet werden, mit dem Ziel, einen zweiten, nicht gestörten Funkträger (Y) zu identifizieren, welcher die neue Frequenz beinhaltet, dabei aber dieselben Zeitschlitze für Übertragung und Empfang beibehält wie auf dem ersten Funkträger (X), und eine Unterbrechung der Kommunikation zu definieren, die auf dem besagten ersten gestörten Träger (X) hergestellt ist;
b) Überprüfen, ob der besagte zweite Funkträger (Y) nicht in einer zuvor gefüllten Tabelle von Kanälen, die als gestört gelten, enthalten ist, und, falls dies der Fall ist, Senden einer Anforderungsnachricht an die interaktive Funkeinheit (RFP), in der die Aktivierung des besagten zweiten Trägers (Y) angefordert wird;
c) Übertragen der Kommunikation von dem besagten ersten Funkträger (X) auf den besagten zweiten Funkträger (Y), sobald eine spezifische Bestätigungsnachricht bezüglich der Benutzung des zweiten Funkträgers (Y) von der interaktiven Funkeinheit (RFP) empfangen wurde;
d) Zurückkehren zu dem Schritt des Abhörens, wenn die besagte Bestätigungsnachricht nicht empfangen wird.

2. Verfahren gemäß Anspruch 1, **dadurch gekennzeichnet, dass** die besagte Anforderungsnachricht auf dem besagten ersten Funkträger (X) gesendet wird.

3. Verfahren gemäß Anspruch 1, **dadurch gekennzeichnet, dass** die besagte Anforderungsnachricht auf dem zweiten Funkträger (Y) gesendet wird.

4. Verfahren gemäß Anspruch 1, **dadurch gekennzeichnet, dass** die besagte Bestätigungsnachricht auf dem besagten ersten Funkträger (X) empfangen wird.

5. Verfahren gemäß Anspruch 1, **dadurch gekennzeichnet, dass** die besagte Bestätigungsnachricht auf dem besagten zweiten Funkträger (Y) empfangen wird.

6. Verfahren gemäß einem der vorstehenden Ansprüche, **dadurch gekennzeichnet, dass** Schritt b) mindestens einmal wiederholt wird, bevor zu Schritt d) übergegangen wird.

7. Verfahren gemäß Anspruch 1, **dadurch gekennzeichnet, dass** vor Schritt b) eine Prüfung erfolgt, dass andere, weniger gestörte Kanäle aus der besagten Tabelle nicht aktiviert werden können.

8. Verfahren gemäß einem der vorstehenden Ansprüche, **dadurch gekennzeichnet, dass**, wenn der besagte erste, gestörte Funkträger (X) Bestandteil einer Multi-Träger-Verbindung ist und zum Doppel-Simplex-Typ gehört, das Verhandlungsprotokoll des neuen Funkträgers Y gemäß Schritt c) auf mindestens einem der Funkträger (Z) des Duplex-Typs derselben Verbindung stattfindet.

9. Verfahren gemäß Anspruch 2, **dadurch gekennzeichnet, dass** die besagte Anforderungsnachricht in dem eigenen Halbrahmen für die Übertragung unmittelbar nach dem Abhören/Auswählen des gefundenen Funkträgers (Y) gesendet wird.

10. Verfahren gemäß Anspruch 4, **dadurch gekennzeichnet, dass** die besagte Bestätigungsnachricht in dem eigenen Halbrahmen für die Übertragung unmittelbar nach dem Senden der besagten Anforderungsnachricht empfangen wird.

11. Verfahren gemäß einem der vorstehenden Ansprüche, **dadurch gekennzeichnet, dass** der besagte Schritt des Abhörens in den Zeitschlitzen erfolgt, in denen die Synchronisation nicht erfolgt ist.

12. Verfahren gemäß einem der vorstehenden Ansprüche, **dadurch gekennzeichnet, dass** die besagten Funkeinheiten (PP, RFP) mit einem doppelt vorhandenen Sende-/Empfangsgerät ausgestattet sind und dass das Abhören einer neuen Frequenz, wie es in dem weiter oben erwähnten Schritt a) beschrieben ist, von demjenigen der besagten beiden Sende-/Empfangsgeräte ausgeführt wird, das in dem betreffenden Augenblick inaktiv ist, während die verbleibenden Schritte b), c), d) von dem jeweils anderen Sender/Empfänger ausgeführt werden.

## Revendications

1. Procédé pour le changement d'un support radio (X) dans un système de Télécommunications Numériques Améliorées sans Fil, appelé DECT, comprenant une unité radio mobile (PP), ci-après définie comme l'unité radio demandeuse, en connexion sur au moins un premier support radio (X) avec une unité radio fixe (RFP), ci-après définie comme l'unité radio interactive, **caractérisé en ce que** lorsque ladite unité radio demandeuse (PP) détecte une mauvaise qualité de la connexion établie avec ladite unité radio interactive (RFP) sur ledit premier support radio (X), exécute en séquence les étapes de :
a) écoute d'une nouvelle fréquence sur au moins l'un des intervalles de temps utilisés pour la réception sur le premier support radio (X), aux fins d'identifier un deuxième support (Y) non parasité comprenant la nouvelle fréquence mais conservant les mêmes intervalles de temps de transmission et de réception du premier support radio (X), et de définir une interruption de la communication établie sur ledit premier support (X) parasité;
b) test que ledit deuxième support (Y) n'appartient pas à une table précédemment remplie de canaux considérés être parasités et si tel est le cas envoi à l'unité radio interactive (RFP) un message de demande requérant l'activation dudit deuxième support (Y) ;
c) transfert de la communication dudit premier support (X) audit deuxième support (Y) à réception d'un message de confirmation spécifique de l'unité radio interactive (RFP) pour l'utilisation du deuxième support (Y) ;
d) retour à l'étape d'écoute si ledit message de confirmation n'est pas reçu.

2. Procédé selon la revendication 1, **caractérisé en ce que** ledit message de demande est envoyé sur ledit premier support (X) .

3. Procédé selon la revendication 1, **caractérisé en ce que** ledit message de demande est envoyé sur le deuxième support (Y).

4. Procédé selon la revendication 1, **caractérisé en ce que** ledit message de confirmation est reçu sur ledit premier support (X).

5. Procédé selon la revendication 1, **caractérisé en ce que** ledit message de confirmation est reçu sur ledit deuxième support (Y).

6. Procédé selon une quelconque revendication précédente, **caractérisé en ce que** l'étape b) est répétée au moins une fois avant le passage à l'étape d).

7. Procédé selon la revendication 1, **caractérisé en ce que** l'étape b) est précédée d'un contrôle que d'autres canaux moins parasités de ladite table ne peuvent pas être activés.

8. Procédé selon une quelconque revendication précédente, **caractérisé en ce que**, si ledit premier support (X) parasité appartient à une connexion multisupport et est du type simplex double, le protocole de négociation du nouveau support Y selon l'étape c) est exécuté sur au moins l'un des supports (Z) du type duplex de la même connexion.

9. Procédé selon la revendication 2, **caractérisé en ce que** ledit message de demande est envoyé dans la propre demi-trame de transmission qui suit immédiatement l'écoute/le choix du support (Y) trouvé.

10. Procédé selon la revendication 4, **caractérisé en ce que** ledit message de confirmation est reçu dans la propre demi-trame de transmission qui suit immédiatement l'envoi dudit message de demande.

11. Procédé selon une quelconque revendication précédente, **caractérisé en ce que** ladite étape d'écoute est exécutée dans les intervalles de temps où la synchronisation n'a pas eu lieu.

12. Procédé selon une quelconque revendication précédente, **caractérisé en ce que** lesdites unités radio (PP, RFP) sont prévues avec un double dispositif d'émission-réception et **en ce que** l'écoute d'une nouvelle fréquence décrite dans l'étape a) mentionnée ci-dessus est exécutée par celui qui est inactif à ce moment desdits deux dispositifs d'émetteur-récepteur, tandis que les autres étapes b), c), d) sont exécutées par l'autre émetteur-récepteur.
